(19) **Europäisches Patentamt / European Patent Office / Office européen des brevets**

(11) **EP 2 787 632 B1**

(12) **FASCICULE DE BREVET EUROPEEN**

(45) Date de publication et mention
de la délivrance du brevet:
**21.03.2018 Bulletin 2018/12**

(51) Int Cl.:
**H02P 25/22** *(2006.01)*    **H02P 21/14** *(2016.01)*

(21) Numéro de dépôt: **14163044.2**

(22) Date de dépôt: **01.04.2014**

(54) **Procédé et dispositif de pilotage d'une machine électrique tournante double triphasée et machine électrique tournante correspondante**

Verfahren und Vorrichtung zum Steuern einer doppelten elektrisch umlaufenden Maschine mit Drehstromantrieb, und entsprechende elektrisch umlaufende Maschine

Method and device for controlling a three-phase double rotary electric machine and corresponding rotary electric machine

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.04.2013 FR 1353100**

(43) Date de publication de la demande:
**08.10.2014 Bulletin 2014/41**

(73) Titulaire: **Valeo Equipements Electriques Moteur 94046 Créteil Cedex (FR)**

(72) Inventeurs:
- **Bodin, Ludovic**
  **94420 Le Plessis Trevise (FR)**
- **Konan, Gilbert**
  **94510 La Queue en Brie (FR)**

(74) Mandataire: **Tran, Chi-Hai et al**
**Valeo Systèmes Thermiques**
**8, rue Louis Lormand**
**CS 80517 La Verrière**
**78322 Le Mesnil Saint Denis Cedex (FR)**

(56) Documents cités:
**US-A1- 2004 075 406**

- **HAMIDREZA PAIRODIN NABI ET AL: "A novel structure for vector control of a symmetrical six-phase induction machine with three current sensors", ENVIRONMENT AND ELECTRICAL ENGINEERING (EEEIC), 2011 10TH INTERNATIONAL CONFERENCE ON, IEEE, 8 mai 2011 (2011-05-08), pages 1-5, XP031946919, DOI: 10.1109/EEEIC.2011.5874735 ISBN: 978-1-4244-8779-0**
- **H. P. NABI ET AL.: "A Novel Structure for Vector Control of Symmetrical Six-Phase Induction Machine with Three Current Sensors", ETASR, vol. 1, no. 2, 2011, pages 23-29,**

**Description**

**DOMAINE TECHNIQUE DE L'INVENTION.**

La présente invention concerne un procédé et un dispositif de pilotage d'une machine électrique tournante double triphasée, c'est-à-dire comportant un stator avec deux enroulements triphasés décalés angulairement l'un par rapport à l'autre.

L'invention concerne également une machine électrique tournante apte à la mise en oeuvre de ce procédé et comprenant ce dispositif. Plus particulièrement, l'invention concerne une machine de ce type pour des applications dans des véhicules automobiles, mais pas exclusivement.

**ARRIERE PLAN TECHNOLOGIQUE DE L'INVENTION.**

Il est connu que les machines électriques tournantes polyphasées présentent des avantages sur les machines triphasées en termes de réduction des oscillations du couple en mode moteur, ou de facilité d'élimination des harmoniques en mode générateur.

Le rendement des machines polyphasées est de plus augmenté. Par exemple, les pertes statoriques d'une machine hexaphasée peuvent être de près de 7% inférieures à celles d'une machine triphasée équivalente.

Cependant, l'augmentation du nombre de phases entraîne une augmentation du nombre de capteurs de courant nécessaires pour piloter la machine, car un capteur est a priori nécessaire pour mesurer chaque variable de courant indépendante. La somme de toutes les intensités étant nulle, le nombre de capteurs nécessaire est égal au nombre de phases diminué de un.

Dans le cas d'une machine triphasée, deux capteurs sont nécessaires, et cinq capteurs dans le cas d'une machine hexaphasée.

Si l'on considère une machine hexaphasée particulière constituée par deux systèmes triphasés, le nombre de capteurs de courant peut être réduit à quatre.

Dans l'article "A Novel Structure for Vector Control of Symmetrical Six-Phase Induction Machine with Three Current Sensors", publié par H. P. Nabi et al. (ETASR, Vol. 1, N° 2, 2011, p. 23 - 29), l'architecture particulière de machine double triphasée qui est décrite permet de réduire à trois le nombre de capteurs nécessaires.

Cependant beaucoup hypothèses simplificatrices sont utilisées dans la modélisation de la machine double triphasée pour l'estimation des courants de phase à partir des mesures des capteurs de courant.

De plus, chaque enroulement de phase d'un système triphasé est connecté en série avec l'enroulement de phase correspondant de l'autre système triphasé.

Il en résulte que l'architecture qui est proposée pour le pilotage vectoriel de la machine double triphasée conduit à une diminution de la fiabilité et ne semble pas permettre de détecter un défaut de la machine s'il y en a un: rupture d'une phase, phase(s) en court-circuit ou capteurs défaillants.

**DESCRIPTION GENERALE DE L'INVENTION.**

En vue d'applications dans le domaine très concurrentiel de l'automobile, le but de la présente invention est par conséquent de limiter le nombre de capteurs de courant pour réduire les coûts sans compromettre la fiabilité, et tout en permettant la détection d'un défaut.

L'invention a précisément pour objet un procédé de pilotage d'une machine électrique tournante double triphasée du type de ceux mettant en oeuvre trois capteurs de courant.

La machine dont il s'agit comporte trois premiers et trois seconds enroulements de phase formant un premier et un second systèmes triphasés décalés angulairement d'un angle de décalage prédéterminé. Les premiers et seconds enroulements de phases sont respectivement parcourus par des premiers et des seconds courants de phase. Le document US20040075406 divulgue une telle machine, cette machine est commandée à l'aide de trois capteurs de courants, deux d'entre eux entourent à la fois un premier conducteur alimentant un des premiers enroulements de phase et un second conducteur alimentant un des seconds enroulements de phase, le troisième capteur mesurant le courant entre les deux points neutres des deux enroulements de phase. Le procédé selon l'invention est décrit à la revendication 1. Selon une caractéristique particulière, on estime les premiers et seconds courants de phase en projetant ce vecteur courant sur des axes initiaux des premier et second systèmes triphasés.

Selon une autre caractéristique particulière, l'état de défaillance est déterminé par des valeurs du module et de la phase du vecteur courant non constantes.

Selon encore une autre caractéristique particulière, la combinaison linéaire est une somme.

Selon encore une autre caractéristique particulière, la combinaison linéaire est une différence.

L'invention concerne également un dispositif de pilotage d'une machine électrique tournante double triphasée du type de ceux comprenant trois capteurs de courant et apte à la mise en oeuvre du procédé décrit ci-dessus, c'est-à-dire que cette machine comporte trois premiers et trois seconds enroulements de phase formant deux systèmes triphasés décalés angulairement d'un angle de décalage prédéterminé.

Conformément au dispositif selon l'invention, chacun des capteurs de courant comporte un circuit magnétique entourant à la fois un premier conducteur alimentant l'un des premiers enroulements de phase et un second conducteur alimentant l'un des seconds enroulements de phase correspondant.

De préférence, ce circuit magnétique comprend en série un capteur à effet Hall.

Une machine électrique tournante double triphasée comprenant ce dispositif de pilotage est également concernée par l'invention.

Ces quelques spécifications essentielles auront rendu évidents pour l'homme de métier les avantages apportés par le procédé de pilotage d'une machine électrique tournante double triphasée synchrone selon l'invention, ainsi que par le dispositif de pilotage et la machine électrique correspondants, par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

**BREVE DESCRIPTION DES DESSINS.**

La **Figure 1** représente schématiquement une machine électrique tournante double triphasée et son dispositif de pilotage selon l'invention dans le cas où l'on mesure une somme des courants de phase des deux systèmes triphasés.

La **Figure 2** représente une analyse vectorielle du procédé selon l'invention correspondant au dispositif de pilotage représenté sur la **Figure 1.**

Les **Figures 3a, et 3b** montrent les résultats d'une transformation de Park des courants de phase mesurés, respectivement dans le cas où la machine électrique tournante double triphasée ne présente aucun défaut, et dans le cas où elle présente un défaut.

**DESCRIPTION DU MODE DE REALISATION PREFERE DE L'INVENTION.**

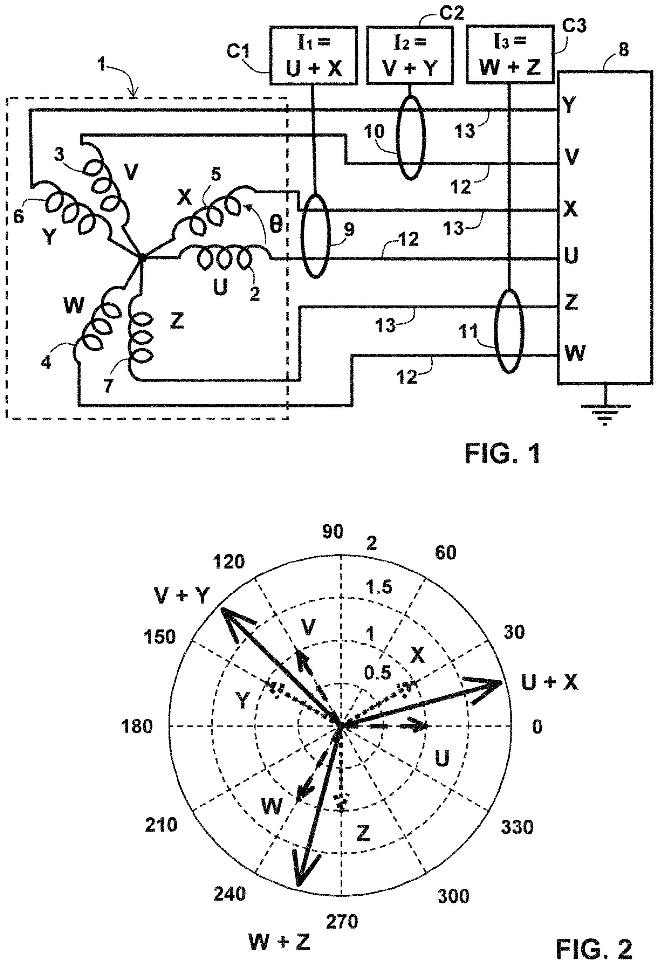

Comme le montre bien la représentation schématique de la **Figure 1,** dans le mode de réalisation préféré de l'invention, le stator 1 de la machine électrique tournante double triphasée comprend un premier système triphasé en étoile constitué de trois premiers enroulements de phase 2, 3, 4 et un second système triphasé en étoile constitué de trois second enroulements de phase 5, 6, 7 décalé l'un par rapport à l'autre d'un angle de décalage θ de 30°.

Les premiers 2, 3, 4 et seconds 5, 6, 7 enroulements de phase ont chacun une extrémité reliée à un module de puissance 8 et une autre extrémité commune.

Des premiers courants de phase U, V, W circulant dans les premiers enroulements de phase 2, 3, 4 et des seconds courants de phase X, Y, Z circulant dans les seconds enroulements de phase 5, 6, 7 sont mesurés par trois capteurs de courant C1, C2, C3 de manière à permettre le pilotage de la machine électrique.

Chacun de ces capteurs de courant C1, C2, C3 comporte un circuit magnétique 9, 10, 11 entourant à la fois un premier conducteur 12 alimentant l'un des premiers enroulements de phase 2, 3, 5 et un second conducteur 13 alimentant l'un des seconds enroulements de phase 5, 6, 7.

De manière connue en soi, un capteur à effet Hall inséré en série dans le circuit magnétique 9, 10, 11 permet de détecter la somme I1, I2, I3 des intensités circulant dans les premier et second conducteurs 12, 13 (le câblage étant celui représenté, c'est-à-dire des premier et second conducteurs 12, 13 sortant en direction du module de puissance 8 d'un même côté du circuit magnétique 9, 10, 11).

Le premier capteur de courant C1 mesure les premier et second courants de phase U et X déphasé de 30°;

Le deuxième capteur de courant C2 mesure les premier et second courants de phase V et Y déphasé de 30°;

Le troisième capteur de courant C3 mesure les premier et second courants de phase V et Z déphasé de 30°.

Comme le représente la **Figure 2**, les premier et second systèmes triphasés sont équilibrés (vecteurs en tiret et en pointillé, respectivement) et les deux systèmes sont décalés de 30°.

Le nouveau système triphasé (vecteurs en trait plein) est caractérisé par son amplitude et sa phase par rapport au premier système triphasé en étoile (vecteurs en tiret) qui sert de référence. On notera un déphasage de - 15 ° par rapport au premier système triphasé.

Une transformation de Park appliquée aux trois mesures I1, I2, I3 permet de calculer le module I et la phase φ d'un vecteur courant équivalent à une représentation vectorielle des premiers et second systèmes triphasés.

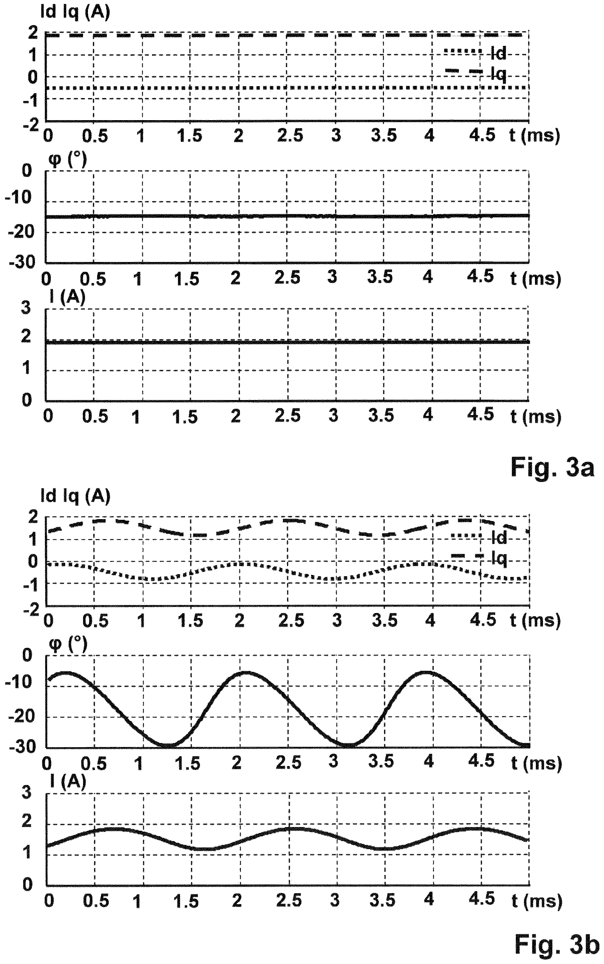

Dans le cas où la machine ne présente aucun défaut, ce module I et cette phase φ sont constants comme le montre l'exemple de la **Figure 3a** (Id et Iq étant respectivement les intensités projetées sur les axes direct et en quadrature de la machine).

Pour estimer chacun des premiers U, V, W et seconds X, Y, Z courants de phase, le vecteur courant calculé est projeté sur les axes initiaux des premier et second systèmes triphasés.

Le gain entre les deux systèmes est:

$$gain = 2^* \cos (phase)$$

où *phase* est l'écart de position entre le vecteur courant et un vecteur U, V, W qui sert de référence.

Pour estimer les premiers courants de phase U, V, W, on applique au vecteur courant l'inverse du gain et une rotation d'angle donné par la somme:

$$position + phase.$$

Pour estimer les seconds courants de phase X, Y, Z, on applique au vecteur courant l'inverse du gain et une rotation d'angle donné par la somme:

$$position + phase + \theta.$$

L'analyse proposée par l'entité inventive permet de reconstituer les premiers U, V, W et seconds X, Y, Z courants de phase à partir des trois mesures I1, I2, I3 fournies seulement par les trois capteurs de courant C1, C2, C3.

Cette analyse permet également de détecter un défaut de la machine électrique tournante double triphasée.

En effet, si l'un des capteurs C1, C2, C3 est défaillant ou si une phase ne fonctionne pas correctement, le système n'est plus équilibré, et le module I et la phase φ du vecteur courant calculé par la transformation de Park ne sont plus constants, comme le monte l'exemple de la **Figure 3b.**

Comme il va de soi, l'invention ne se limite pas au seul mode de réalisation préférentiel décrit ci-dessus.

Notamment, dans le cas où les premier et second conducteurs sortent en direction du module de puissance 8 de deux côtés opposés du circuit magnétique 9, 10, 11, les capteurs C1, C2, C3 mesurent la différence des intensités circulant dans les premier et second conducteurs 12, 13.

Des moyens autres qu'un capteur à effet Hall peuvent être utilisés pour mesurer le flux magnétique dans le circuit magnétique 9, 10, 11, par exemple ce circuit peut être le circuit magnétique d'un transformateur travaillant en saturation.

Le capteur à effet Hall peut également être simplement placé à proximité des premier et second conducteurs, de sorte que la mesure d'intensité est une combinaison linéaire des intensités circulant dans les premier et second conducteurs 12, 13 (la pondération dépendant des distances respectives).

La même analyse pourrait être effectuée pour des machine électriques tournantes double triphasées présentant des angles de décalage θ différents de 30°

L'invention embrasse donc toutes les variantes possibles de réalisation dans la mesure où ces variantes restent dans le cadre défini par les revendications ci-après.

## Revendications

1. Procédé de pilotage d'une machine électrique tournante double triphasée du type de ceux mettant en oeuvre trois capteurs de courant (C1, C2, C3), ladite machine comportant trois premiers (2, 3, 4) et trois seconds (5, 6, 7) enroulements de phase formant un premier et un second systèmes triphasés décalés angulairement d'un angle de décalage (θ) prédéterminé, lesdits premiers (2, 3, 4) et seconds (5, 6, 7) enroulements de phase étant parcourus respectivement par des premiers (U, V, W) et des seconds (X, Y, Z) courants de phase et dans ledit procédé on mesure au moyen de chacun desdits capteurs de courant (C1, C2, C3) une combinaison linéaire (I1, I2, I3) de l'un desdits premiers courants de phase (U, V, W) et de l'un desdits seconds courants de phase (X, Y, Z) correspondant, chacun desdits capteurs de courant (C1, C2, C3) comportant un circuit magnétique (9, 10, 11) entourant à la fois un premier conducteur (12) alimentant l'un desdits premiers enroulements de phase (2, 3, 4) et un second conducteur (13) alimentant l'un desdits seconds enroulements de phase (5, 6, 7) correspondant, l'on calcule un module (I) et une phase (φ) d'un vecteur courant équivalent à une représentation vectorielle desdits premier et second systèmes triphasés au moyen d'une transformation de Park en fonction dudit angle de décalage (θ) et d'un ensemble de mesures (I1, I2, I3) constitué par ladite combinaison linéaire mesurée par chacun desdits capteurs de courant (C1, C2, C3), et l'on détermine un état de défaillance de ladite machine en fonction d'un résultat de ladite transformation de Park.

2. Procédé de pilotage d'une machine électrique tournante double triphasée selon la revendication 1, **caractérisé en ce que** l'on estime lesdits premiers (U, V, W) et seconds (X, Y, Z) courants de phase en projetant ledit vecteur courant sur des axes initiaux desdits premier et second systèmes triphasés.

3. Procédé de pilotage d'une machine électrique tournante double triphasée selon la revendication 1 ou 2, **caractérisé en ce que** ledit état de défaillance est déterminé par des valeurs dudit module (I) et de ladite phase (φ) dudit vecteur courant non constantes.

4. Procédé de pilotage d'une machine électrique tournante double triphasée selon l'une quelconque des revendications 1 à 3 précédentes, **caractérisé en ce que** ladite combinaison linéaire est une somme (I1, I2, I3).

5. Procédé de pilotage d'une machine électrique tournante double triphasée selon l'une quelconque des revendications 1 à 4 précédentes, **caractérisé en ce que** ladite combinaison linéaire est une différence.

6. Dispositif de pilotage d'une machine électrique tournante double triphasée du type de ceux comprenant trois capteurs de courant (C1, C2, C3,) et apte à la mise en oeuvre du procédé selon l'une quelconque des revendications 1 à 5 précédentes.

**7.** Dispositif de pilotage d'une machine électrique tournante double triphasée selon la revendication 6, **caractérisé en ce que** ledit circuit magnétique (9, 10, 11) comprend en série un capteur à effet Hall.

**8.** Machine électrique tournante double triphasée, **caractérisée en ce qu'**elle comprend un dispositif de pilotage selon la revendication 6 ou 7

**Patentansprüche**

**1.** Verfahren zum Steuern einer doppelten umlaufenden elektrischen Dreiphasenmaschine von der Art, die drei Stromsensoren C2, C3) verwendet, wobei die Maschine drei erste (2, 3, 4) und drei zweite (5, 6, 7) Phasenwicklungen aufweist, die ein erstes und ein zweites Dreiphasensystem bilden, die winkelmäßig um einen vorbestimmten Verschiebungswinkel (θ) verschoben sind, wobei die ersten (2, 3, 4) und zweiten (5, 6, 7) Phasenwicklungen von ersten (U, V, W) bzw. zweiten (X, Y, Z) Phasenströmen durchflossen werden, und im Verfahren mittels jedes der Stromsensoren (C1, C2, C3) eine lineare Kombination (I1, I2, I3) eines der ersten Phasenströme (U, V, W) und eines entsprechenden der zweiten Phasenströme (X, Y, Z) gemessen wird, wobei jeder der Stromsensoren (C1, C2, C3) einen Magnetkreis (9, 10, 11) aufweist, der sowohl einen ersten Leiter (12), der eine der ersten Phasenwicklungen (2, 3, 4) versorgt, und einen zweiten Leiter (13) umgibt, der eine entsprechende der zweiten Phasenwicklungen (5, 6, 7) versorgt, ein Modul (I) und eine Phase (φ) eines Stromvektors gleich einer Vektordarstellung der ersten und zweiten Dreiphasensysteme mittels einer Park-Transformation abhängig vom Verschiebungswinkel (θ) und einer Einheit von Messungen (I1, I2, I3) berechnet werden, die aus der linearen Kombination besteht, die von jedem der Stromsensoren (C1, C2, C3) gemessen wird, und ein Ausfallzustand der Maschine abhängig von einem Ergebnis der Park-Transformation bestimmt wird.

**2.** Steuerverfahren einer doppelten umlaufenden elektrischen Dreiphasenmaschine nach Anspruch 1, **dadurch gekennzeichnet, dass** die ersten (U, V, W) und zweiten (X, Y, Z) Phasenströme geschätzt werden, indem der Stromvektor auf Anfangsachsen der ersten und zweiten Dreiphasensysteme projiziert wird.

**3.** Steuerverfahren einer doppelten umlaufenden elektrische Dreiphasenmaschine nach Anspruch 1 oder 2, **dadurch gekennzeichnet, dass** der Ausfallzustand durch Werte des Moduls (I) und der Phase (φ) des Stromvektors bestimmt wird, die nicht konstant sind.

**4.** Steuerverfahren einer doppelten umlaufenden elektrischen Dreiphasenmaschine nach einem der vorhergehenden Ansprüche 1 bis 3, **dadurch gekennzeichnet, dass** die lineare Kombination eine Summe (I1, I2, I3) ist.

**5.** Steuerverfahren einer doppelten umlaufende elektrische Dreiphasenmaschine nach einem der vorhergehenden Ansprüche 1 bis 4, **dadurch gekennzeichnet, dass** die lineare Kombination eine Differenz ist.

**6.** Steuervorrichtung einer doppelten umlaufenden elektrischen Dreiphasenmaschine der Art, die drei Stromsensoren (C1,C2, C3,) enthält und für die Durchführung des Verfahrens nach einem der vorhergehenden Ansprüche 1 bis 5 geeignet ist.

**7.** Steuervorrichtung einer doppelten umlaufenden elektrischen Dreiphasenmaschine nach Anspruch 6, **dadurch gekennzeichnet, dass** der Magnetkreis (9, 10, 11) in Reihe einen Hall-Sensor enthält.

**8.** Doppelte umlaufende elektrische Dreiphasenmaschine, **dadurch gekennzeichnet, dass** sie eine Steuervorrichtung nach Anspruch 6 oder 7 enthält.

**Claims**

**1.** Method for controlling a three-phase double rotary electric machine of the type of those employing three current sensors (C1, C2, C3), said machine including three first (2, 3, 4) and three second (5, 6, 7) phase windings forming first and second three-phase systems that are angularly offset by a predetermined offset angle (θ), said first (2, 3, 4) and second (5, 6, 7) phase windings having first (U, V, W) and second (X, Y, Z) phase currents flowing therethrough, respectively, and in said method a linear combination (I1, 12, 13) of one of said first phase currents (U, V, W) and of a corresponding one of said second phase currents (X, Y, Z) is measured by means of each of said current sensors (C1, C2, C3), each of said current sensors (C1, C2, C3) including a magnetic circuit (9, 10, 11) surrounding both a first conductor (12) supplying power to one of said first phase windings (2, 3, 4) and a second conductor (13) supplying power to a corresponding one of said second phase windings (5, 6, 7), a modulus (I) and a phase (φ) of a current vector that is equivalent to a vectorial representation of said first and second three-phase systems are calculated by means of a Park transformation according to said offset angle (θ) and of a set of measurements (I1, 12, 13) consisting of said linear combination measured by each of said current sensors (C1, C2, C3), and a fault state of said machine is determined according to a result of said Park transformation.

2. Method for controlling a three-phase double rotary electric machine according to Claim 1, **characterized in that** said first (U, V, W) and second (X, Y, Z) phase currents are estimated by projecting said current vector onto initial axes of said first and second three-phase systems.

3. Method for controlling a three-phase double rotary electric machine according to Claim 1 or 2, **characterized in that** said fault state is determined by non-constant values of said modulus (I) and of said phase (φ) of said current vector.

4. Method for controlling a three-phase double rotary electric machine according to any one of the preceding Claims 1 to 3, **characterized in that** said linear combination is a sum (I1, 12, 13).

5. Method for controlling a three-phase double rotary electric machine according to any one of the preceding Claims 1 to 4, **characterized in that** said linear combination is a difference.

6. Device for controlling a three-phase double rotary electric machine of the type of those employing three current sensors (C1, C2, C3), and capable of implementing the method according to any one of the preceding Claims 1 to 5.

7. Device for controlling a three-phase double rotary electric machine according to Claim 6, **characterized in that** said magnetic circuit (9, 10, 11) comprises a Hall effect sensor in series.

8. Three-phase double rotary electric machine, **characterized in that** it comprises a control device according to Claim 6 or 7.

FIG. 1

FIG. 2

Fig. 3a

Fig. 3b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 20040075406 A

**Littérature non-brevet citée dans la description**

• A Novel Structure for Vector Control of Symmetrical Six-Phase Induction Machine with Three Current Sensors. ETASR. H. P. Nabi, 2011, vol. 1, 23-29